# EUROPÄISCHE PATENTANMELDUNG

(11) **EP 1 881 255 A2**
(43) Veröffentlichungstag der Anmeldung: **23.01.2008**
(21) Anmeldenummer: 07109430.4
(22) Anmeldetag: 01.06.2007
(51) Int. Cl.: F16M 1/026

(54) **Nabenhalterung für eine Welle einer Hubkolbenbrennkraftmaschine**

(30) Priorität: 18.07.2006 EP 06405311
(71) Anmelder: Wärtsilä Schweiz AG, 8401 Winterthur (CH)
(72) Erfinder: Sönnichsen, Samuel, 8405 Winterthur (CH)
(74) Vertreter: Sulzer Management AG

(57) **Zusammenfassung**

Die Erfindung betrifft eine Nabenhalterung (1) für die Aufnahme einer Welle (2) eines Zahnrads (3) zum Antrieb einer Versorgungseinheit (4) einer Hubkolbenbrennkraftmaschine (5), insbesondere Zweitakt-Grossdieselmotor (5), wobei die Nabenhalterung (1) eine Grundplatte (100) zum Einbau zwischen zwei Gleitflächen (60) zweier Gleitbahnbleche (6) eines Ständers (7) der Hubkolbenbrennkraftmaschine (5), sowie eine Wellennabe (110) zur Aufnahme der Welle (2) des Zahnrads (3) umfasst und die Nabenhalterung im Bereich der Wellennabe (110) eine wulstartige Nabenverstärkung (111) aufweist. Erfindungsgemäss ist dabei die Grundplatte (100) einwandig ausgeführt ist. Die Erfindung betrifft weiterhin einen Ständer (7) mit einer erfindungsgemässen Nabenhalterung (1), sowie eine Hubkolbenbrennkraftmaschine (5) mit einem Ständer (7) gemäss der vorliegenden Erfindung.

## Beschreibung

Die Erfindung betrifft eine Nabenhalterung und einen Ständer für eine Hubkolbenbrennkraftmaschine, sowie eine Hubkolbenbrennkraftmaschine gemäss dem Oberbegriff des jeweiligen unabhängigen Anspruchs.

Ein Grossdieselmotor der Kreuzkopfbauart, wie er bevorzugt im Schiffsbau oder in stationären Anlagen, beispielsweise zur Erzeugung elektrischer Energie zum Einsatz kommt, umfasst drei grosse Gehäusesegmente, die den Rahmen des Motors bilden. Auf einer Grundplatte, die neben einem Lagersattel mit Kurbelwellenhauptlager zur Aufnahme der Kurbelwelle transversale Stützelemente aufweist, ist, getrennt durch eine Bodenplatte, ein sogenannter Ständer angeordnet. Der Ständer umfassst entsprechend der Anzahl der Zylinder des Grossdieselmotors mehrere gegenüber angeordnete Stützkörper, die jeweils eine senkrecht verlaufende Gleitfläche zur Führung zweier benachbarter Kreuzköpfe, die über Schubstangen mit der Kurbelwelle verbunden sind, aufweisen. Dabei werden jeweils zwei gegenüberliegende senkrecht verlaufende Gleitflächen durch eine Mittelwand zusätzlich abgestützt. Die einzelnen Stützkörper sind in der Regel durch ein gemeinsames Deckblech miteinander verbunden. Oberhalb des Ständers ist am Deckblech eine Zylindersektion, häufig auch Zylindermantel genannt, angeordnet die zur Aufnahme mehrerer Zylinderliner geeignet ist. Die Grundplatte, der Ständer und die Zylindersektion werden dabei durch Zuganker, die sich im Bereich des Ständers in aller Regel innerhalb der Stützkörper erstrecken, miteinander verbunden, indem die Zuganker in oder an der Grundplatte unter erheblicher Vorspannung verschraubt werden.

Dabei umfassen die bekannten Motoren eine Reihe von Zusatzaggregaten und Versorgungseinheiten, wie beispielsweise Hochdruckpumpen, die zur Erzeugung eines hohen Betriebsdrucks in einem Hochdruckspeicher eines Commonrail Systems für Brennstoff, Schmieröl oder ein anderes Betriebsmittel dienen können, wobei der Antrieb des Zusatzaggregats bzw. der Versorgungseinheit über ein entsprechendes Versorgungsrad erfolgt, das wirkfest mit dem Zusatzaggregat oder der Versorgungseinheit, z.B. mit einer Hochdruckpumpe zu deren Antrieb verbunden ist.

Der Antrieb des Versorgungsrades, das üblicherweise ein Versorgungszahnrad ist, erfolgt in der Regel durch ein Zahnrad, das drehfest an eine Welle gekoppelt ist, die in einer im Ständer verschweissten Nabenhalterung umfassend eine Grundplatte mit Wellennabe gelagert ist. Häufig ist dabei zwischen dem Zahnrad und dem Versorgungszahnrad noch ein Zwischenzahnrad vorgesehen, um die Distanz zwischen Versorgungszahnrad und Zahnrad zu überwinden, wenn das entsprechende Zusatzaggregat oder die entsprechende Versorgungseinheit nicht unmittelbar in der Nähe des Zahnrads am Motor angeordnet werden kann.

Der Antrieb des Zahnrads, des Zwischenzahnrads und des Versorgungszahnrads erfolgt über ein Antriebszahnrad, das mit der Kurbelwelle des Grossdieselmotors drehfest verbunden ist.

Die bekannte Nabenhalterung umfasst dabei eine dickere Platte, in der die Welle des Zahnrads in einer Wellennabe gelagert ist. Die dickere Platte ist zwischen zwei Gleitbahnblechen im Ständer verschweisst. Da bei den bisher bekannten Nabenhalterungen durch die dickere Platte allein eine ausreichende Stabilisierung der Welle nicht gewährleistet ist, umfassen die bekannten Nabenhalterungen notwendigerweise zusätzlich eine zweite dünnere Platte, die die Welle und damit das Zahnrad selbst, das auf der Welle drehfest angeordnet ist, stabilisiert. Durch die zweite dünnere Platte wird die Lagerung des Zahnrads insbesondere in Bezug auf dynamische Belastungen, die im Betriebszustand des Grossdieselmotors auftreten, stabilisiert.

Diese bisher bekannten Nabenhalterungen zeichnen sich gleich durch mehrere negative Eigenschaften bzw. durch mehrere verschiedene Nachteile aus.

Erstens ist die Konstruktion mit zwei parallelen Platten aufwendig und damit teuer. Die Installation der Anordnung im Ständer ist kompliziert, da die beiden Platten der Nabenhalterung, also die dünnere und die dickere Platte, exakt aufeinander ausgerichtet werden müssen, um eine sichere und exakte Lagerung der Welle des Zahnrads zu gewährleisten.

Darüber hinaus müssen beide Platten mit dem Ständer des Motors verschweisst werden. Das geschieht in der Regel in einem zweistufigen Verfahren: Zunächst wird die dickere der beiden Platten mit dem Ständer beidseitig verschweisst. Sodann wird die dünnere Platte in einem bestimmten Abstand parallel zur dickeren Platte positioniert und ebenfalls mit dem Ständer verschweisst. Aus geometrischen Gründen kann die dünnere Platte jedoch nicht zweiseitig verscheisst werden, da der Schweisser den Innenraum zwischen dicker und dünner Platte zum Schweissen nicht mehr erreichen kann, so dass die dünnere Platte nur aussen verschweisst werden kann, was zu den dem Fachmann wohlbekannten bekannten Nachteilen führen kann, die z.B. die Stabilität der Anordnung oder Verspannungen im Material, die durch das einseitige Verschweissen entstehen, betreffen können.

Es ist daher ein extrem hoher Aufwand beim Einschweissen der bekannten doppelwandigen Nabenhalterungen notwendig, um die vorgenannten Probleme zu vermeiden oder auch nur zu minimieren, so dass die Betriebssicherheit des Grossdieselmotors gewährleistet ist.

Es versteht sich, dass dadurch auch entsprechende Wartungsarbeiten massiv erschwert und damit verteuert werden und auch z.B. Sicherheitsüberprüfungen zum Teil sehr schwierig sind, weil unter anderem der Zwischenraum zwischen den beiden Platten nicht oder kaum zugänglich ist.

Es ist daher eine Aufgabe der Erfindung, eine verbesserte Nabenhalterung, einen Ständer sowie eine Hubkolbenbrennkraftmaschine mit einer verbesserten Nabenhalterung vorzuschlagen, so dass die zuvor aus dem Stand der Technik bekannten Nachteile vermieden werden.

Die diese Aufgaben lösenden Gegenstände der Erfindung sind durch die Merkmale der unabhängigen Ansprüche gekennzeichnet.

Die abhängigen Ansprüche beziehen sich auf besonders vorteilhafte Ausführungsformen der Erfindung.

Die Erfindung betrifft somit eine Nabenhalterung für die Aufnahme einer Welle eines Zahnrads zum Antrieb einer Versorgungseinheit einer Hubkolbenbrennkraftmaschine, insbesondere Zweitakt-Grossdieselmotor, wobei die Nabenhalterung eine Grundplatte zum Einbau zwischen zwei Gleitflächen zweier Gleitbahnbleche eines Ständers der Hubkolbenbrennkraftmaschine, sowie eine Wellennabe zur Aufnahme der Welle des Zahnrads umfasst und die Nabenhalterung im Bereich der Wellennabe eine wulstartige Nabenverstärkung aufweist. Erfindungsgemäss ist dabei die Grundplatte einwandig ausgeführt.

Für die Erfindung ist es somit wesentlich, dass die Grundplatte einteilig ausgeführt ist, und nicht wie aus dem Stand der Technik bekannt, doppelwandig ausgeführt.

Während bei der aus dem Stand der Technik bekannten Lösung die Nabenhalterung für das Zahnrad, das in der Regel über ein oder zwei Zwischenräder mit einer Versorgungseinheit, beispielsweise mit einer Hochdruckpumpe zur Erzeugung eines hohen Drucks in einem Commonrail-Speicher gekoppelt ist, in einer dickeren Platte platziert ist und zusätzlich, insbesondere um dynamische Belastungen im Betriebszustand der Hubkolbenbrennkraftmaschine zu kompensieren, noch mit einer zweiten dünneren Halteplatte fixiert ist, ist die Wellennabe an der Grundplatte der erfindungsgemässen Nabenhalterung derart ausgestaltet, dass keine zusätzliche Halteplatte zur Kompensierung der im Betriebszustand der Hubkolbenbrennkraftmaschine auftretenden dynamischen Belastungen mehr notwendig ist.

Die Vorteile der erfindungsgemässen Lösung liegen auf der Hand. Die Grundplatte kann bequem und zuverlässig beidseitig frei von inneren mechanischen Verspannungen an die Gleitbahnbleche angeschweisst werden, während bei der bekannten Nabenhalterung die zusätzliche Halteplatte nur einseitig verschweisst werden kann, da der Innenraum zwischen der dicken Platte und der dünnen Halteplatte zum Schweissen aus geometrischen Gründen nicht zugänglich ist.

Dadurch, dass die Grundplatte der erfindungsgemässen Nabenhalterung einteilig ausgeführt ist, ist selbstverständlich die Installation der Grundplatte wesentlich einfacher durchführbar, da die Grundplatte nicht zusätzlich noch in Bezug auf eine dünne Halteplatte ausgerichtet werden muss. Dadurch ist eine viel einfachere und exaktere Ausrichtung der Welle des Zahnrads und damit des Zahnrads selber möglich, wodurch eine höhere Betriebssicherheit erreichbar ist und sich dadurch die Verschleiss- und Reparaturintervalle deutlich verlängern.

Durch die einfachere Installation, und natürlich im Reparaturfall auch durch die deutlich einfachere Deinstallation der erfindungsgemässen Nabenhalterung, sowie die deutlich verlängerten Wartungs- und Reparaturintervalle können darüber hinaus auch in erhebliche Masse die damit zusammenhängenden Kosten gesenkt werden.

In einem für die Praxis besonders bevorzugten Ausführungsbeispiel weist die Nabenhalterung im Bereich der Wellennabe eine wulstartige Nabenverstärkung auf. Dadurch wird die Nabenhalterung im Bereich der Wellennabe verstärkt, wodurch insbesondere, aber nicht nur, die dynamischen Belastungen, die auf die Welle des Zahnrads und / oder auf die Nabenhalterung direkt wirken, besonders gut kompensierbar ist, ohne dass eine zweite dünne Halteplatte vorgesehen werden muss, wie aus dem Stand der Technik bekannt.

In speziellen Fällen, wenn z.B. besonders grosse Belastungen auf die Welle des Zahnrads wirken und / oder eine besonders gute Stabilisierung der Nabenhalterung und damit der Lage der Achse des Zahnrads erforderlich ist, kann die Nabenhalterung im Bereich der Wellennabe auch doppelseitig eine wulstartige Nabenverstärkung aufweisen, d.h. eine wustartige Nabenverstärkung kann beidseitig von der Grundplatte vorgesehen werden, wodurch eine noch bessere Stabilisierung der Welle des Zahnrads möglich ist.

Bevorzugt ist dabei die Wellennabe derart in der Grundplatte vorgesehen, dass die Wellennabe im Einbauzustand der Nabenhalterung zwischen den beiden Gleitflächen der Gleitbahnbleche des Ständers zentriert angeordnet ist. D.h., eine Längsachse der Welle des Zahnrads hat dann zu den beiden benachbarten Gleitflächen für die Gleitschuhe des Kreuzkopfes den selben Abstand, sitzt also genau in der Mitte zwischen den beiden Gleitbahnblechen, an die die Grandplatte der Nabenhalterung angeschweisst ist.

In einem anderen Ausführungsbeispiel, beispielsweise wenn die Konstruktion der Hubkolbenbrennkraftmaschine es erfordert, kann die Wellennabe derart in der Grundplatte vorgesehen sein, dass die Wellennabe im Einbauzustand der Nabenhalterung zwischen den beiden Gleitflächen der Gleitbahnbleche des Ständers asymmetrisch angeordnet ist, d.h., eine Längsachse der Welle des Zahnrads hat dann zu den beiden benachbarten Gleitflächen für die Gleitschuhe des Kreuzkopfes nicht den gleichen Abstand, sitzt also nicht genau in der Mitte zwischen den beiden Gleitbahnblechen, an die die Grundplatte der Nabenhalterung angeschweisst ist.

Die Erfindung betrifft weiterhin einen Ständer, insbesondere einen Ständer für einen Grossdieselmotor, mit einer oben näher beschriebenen erfindungsgemässen Nabenhalterung, wobei die Grundplatte bevorzugt mit den beiden Gleitbahnblechen des Ständers verschweisst, insbesondere beidseitig verschweisst ist.

Ausserdem betrifft die Erfindung eine Hubkolbenbrennkraftmaschine, insbesondere Grossdieselmotor, mit einem zuvor beschriebenen Ständer, der eine erfindungsgemässe Nabenhalterung umfasst.

Die Erfindung wird im Folgenden an Hand der Zeichnung näher erläutert. Es zeigen in schematischer Darstellung:
- Fig. 1: Schnitt durch einen Kreuzkopf-Grossdieselmotor mit Grundplatte, Ständer und Zylindersektion;
- Fig. 2: eine Nabenhalterung für die Aufnahme einer Welle eines Zahnrads;
- Fig. 3: eine aus dem Stand der Technik bekannte Nabenhalterung im Schnitt entlang der Schnittlinie I - I gemäss Fig. 2;
- Fig. 4: eine erfindungsgemässe Nabenhalterung im Schnitt entlang der Schnittlinie I - I gemäss Fig. 2.

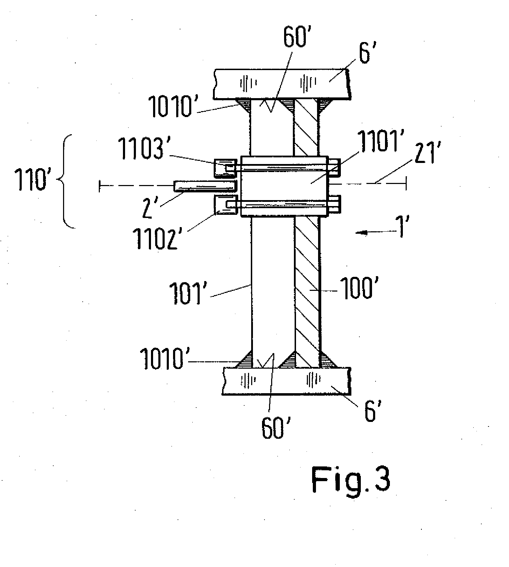

In der weiteren Beschreibung wird zur Verdeutlichung und Abgrenzung der vorliegenden Erfindung anhand der Fig. 3 kurz eine aus dem Stand der Technik bekannte Nabenhalterung diskutiert. Zur Abgrenzung des Stands der Technik von der vorliegenden Erfindung, sind diejenigen Merkmale, die sich auf den Stand der Technik beziehen, mit einem Hochkomma versehen, während die erfindungsgemässen Merkmale mit Bezugszeichen ohne Hochkomma bezeichnet sind.

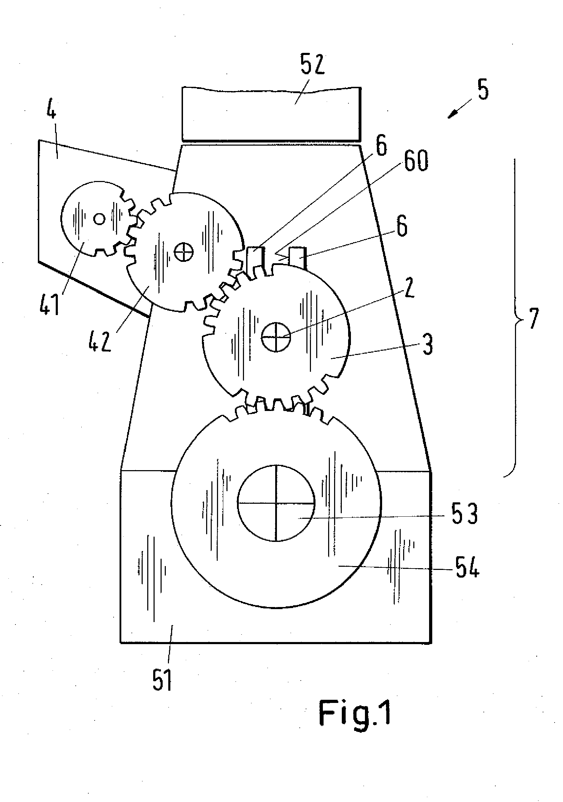

Fig. 1 zeigt schematisch in einem Schnitt zwischen dem sechsten und siebten Zylinder den allgemeinen Aufbau eines Zwölfzylinder Kreuzkopf-Grossdieselmotors 5, wie er an sich aus dem Stand der Technik bereits bekannt ist. Der in Fig. 1 gezeigte erfindungsgemässe Motor 5 unterscheidet sich dabei von einem aus dem Stand der Technik bekannten Motor 5 dadurch, das der erfindungegemässe Zweitakt-Grossdieselmotor der Fig. 1 einen erfindungsgemässen Ständer 7 mit einer nicht explizit dargestellten erfindungsgemässen Nabenhalterung 1 umfasst.

Der Kreuzkopf-Grossdieselmotor 5 umfasst in an sich bekannter Weise eine Grundplatte 51, einen Ständer 7 und eine Zylindersektion 52. Die Zylindersektion 52 dient in an sich bekannter Weise zur Aufnahme von nicht dargestellten Zylindern. Der Ständer 7, der beispielsweise durch Zusammenschweissen von Stahlblechen entstanden ist, weist ein Bodenblech sowie zwei Aussenwände auf und bildet gemeinsam mit den darstellungsgemäss senkrecht verlaufenden Gleitbahnblechen 6 einen im Querschnitt trapezförmige Rahmen, die durch ein gemeinsames Deckblech verbunden ist. Im Betriebszustand läuft in bekannter Weise ein Kreuzkopf entlang der Gleitflächen 60 der Gleitbahnbleche 6 hin und her, das heisst darstellungsgemäss auf und ab. Die in Fig. 1 nicht dargestellte Nabenhalterung 1 ist an den Gleitbahnblechen 6 angeschweisst, so dass das Zahnrad 3 über die Welle 2 wie gezeigt mit dem Zwischenrad 42 und dem Antriebsrad 54 drehfest in Eingriff steht.

Der Ständer 7 ist auf der Grundplatte 51 angeordnet, die einen Lagersattel mit Lagerschale zur Lagerung einer Kurbelwelle 53 umfasst, die drehfest mit dem Antriebsrad 54 verbunden ist. Die Kurbelwelle 53 ist in an sich bekannter Weise mit einem in Fig. 1 nicht gezeigten Kreuzkopf über eine ebenfalls nicht gezeigte Schubstange verbunden.

Der Motor 5 umfasst weiterhin eine Versorgungseinheit 4, die im Fall der Figur 1 eine Hochdruckpumpe 4 ist, mit der zum Beispiel in einem Hochdruckspeicher eines Commonrail Systems für Brennstoff, Schmieröl oder ein anderes Betriebsmittel, durch Antrieb des Versorgungszahnrad 41 ein hoher Druck herstellbar ist, da das Antriebszahnrad 41 wirkfest mit der Hochdruckpumpe zu deren Antrieb verbunden ist.

Der Antrieb des Versorgungszahnrads 41 erfolgt durch ein Zwischenzahnrad 42, das seinerseits mit dem Zahnrad 3 in Eingriff steht, das drehfest an die Welle 2 gekoppelt ist, die in der in Fig. 1 nicht dargestellten Wellennabe 110 gelagert ist. Der Antrieb des Zahnrads 2, des Zwischenzahnrads 42 und des Versorgungszahnrads 41 erfolgt über das Antriebszahnrad 54, das mit der Kurbelwelle 53 drehfest verbunden ist, dadurch dass das Antriebszahnrad 54, das Zahnrad 2, das Zwischenzahnrad 42 und das Versorgungszahnrad 41 in der in Fig. 1 dargestellten Anordnung in an sich bekannter Weise miteinander in Eingriff stehen.

Es versteht sich, dass die in Fig. 1 dargestellte Anordnung je nach Typ der Hubkolbenbrennkraftmaschine 5 auch anders sein kann. Beispielweise müssen die Zahnräder 2, 41, 42, 54 bei einem 12 Zylinder Motor 5 nicht unbedingt zwischen dem sechsten und siebten Zylinder angeordnet sein, sondern können auch zwischen zwei anderen Zylinder oder an einem Ende des Motors 5 angeordnet sein. Auch kann in einem speziellen Fall das Zwischenzahnrad 42 fehlen. Ausserdem kann die Hubkolbenbrennkraftmaschine 5 auch mehr oder weniger als 12 Zylinder haben und die Versorgungseinheit 4 braucht nicht unbedingt eine Hochdruckpumpe 4 für ein Commonrail System sein, sondern kann auch eine andere Versorgungseinheit 4 sein, die im Betriebszustand der Hubkolbenbrennkraftmaschine 5 über das Zahnrad 2 angetrieben werden muss.

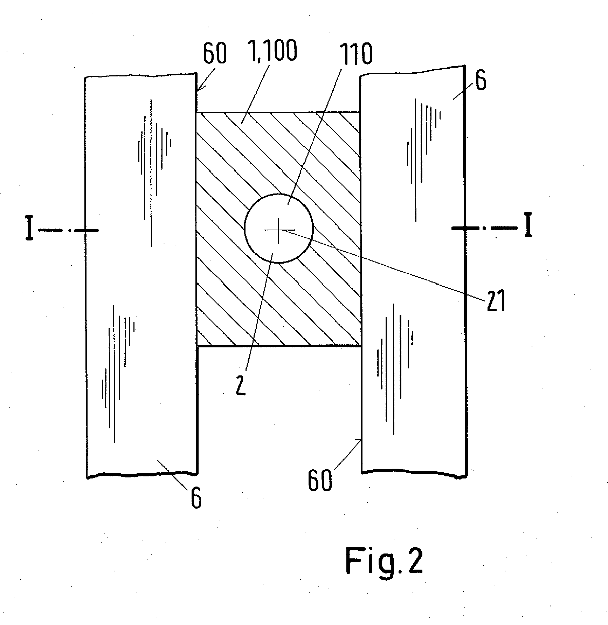

In Fig. 2 ist eine erfindungsgemässe Nabenhalterung 1 mit Welle 2 ohne das zugehörige Zahnrad 3 dargestellt. Die Nabenhalterung 1 umfasst eine Grundplatte 100, die an zwei benachbarten Gleitbahnblechen 6 im Bereich der Gleitflächen 60, entlang derer sich im Betriebszustand des Grossdieselmotors 5 die Gleitschuhe des Kreuzkopfs bewegen, angeschweisst sind. Im Beispiel der Figur 2 ist die Wellenabe 110 derart angeordnet, dass die Längsachse 21 der Welle 2 symmetrisch zwischen den beiden Gleitbahnbleche 6 angeordnet ist. Es versteht sich, dass die erfindungsgemässe Nabenhalterung 1 in Bezug auf die Wellennabe 110 auch asymmetrisch ausgestaltet sein kann, dass heisst, dass im Einbauzustand die Längsachse 21 der Welle 2 zu den beiden Gleitbahnblechen 6 unterschiedlich beabstandet sein kann, also nicht genau in der Mitte zwischen den beiden Gleitbahnblechen 6 sitzen kann.

Zum besseren Verständnis der vorliegenden Erfindung ist in Fig. 3 eine aus dem Stand der Technik bekannte Nabenhalterung 1' in einem Querschnitt schematisch dargestellt, der in analoger Weise einem Schnitt entlang der Schnittlinie I-I einer erfindungsgemässen Nabenhalterung 1 der Fig. 2 sinngemäss entspricht.

Die bekannte Nabenhalterung 1' der Fig. 3 umfasst eine dickere Platte 100', in der eine Welle 2' in einer Wellennabe 110' angeordnet ist. Die dickere Platte 100' ist zwischen zwei Gleitbahnblechen 6' im Bereich von Gleitflächen 60' angeschweisst. Da bei der bekannten Nabenhalterung 1' durch die dickere Platte 100' allein eine ausreichende Stabilisierung der Welle 2' nicht gewährleistet ist, umfasst die Nabenhalterung 1' notwendigerweise zusätzlich eine dünnere Platte 101', die die Welle 2' und damit das in Fig. 3 nicht dargestellte Zahnrad, das auf der Welle 2' drehfest angeordnet ist, insbesondere gegen dynamische Belastungen, die im Betriebszustand des Grossdieselmotors auftreten, stabilisiert. Man erkennt insbesondere, dass die dünne Platte 101' nicht im Bereich zwischen der dünnen Platte 101' und der dickeren Platte 100' verschweisst ist, da dieser Bereich, wie dem Fachmann wohlbekannt ist, zum Schweissen der dünnen Platte 101' nicht zugänglich ist.

Die Wellennabe 110' ist dabei in bekannter Weise zweiteilig aufgebaut und umfasst ein erstes Nabenteil 1101', das in axialer Richtung in der dickeren Platte 100' und der dünneren Platte 101' fixiert ist, z.B. eingeschweisst ist und ein zweites Nabenteil 1102', das zur Aufnahme der Welle 2' auf der Achse 21' des nicht dargestellten Zahnrades dient. Das zweite Nabenteil 1102' wird dabei mit einem oder mehreren Befestigungsmitteln 1103', z.B. mittels Schrauben 1103' oder Bolzen 1103' am ersten Nabenteil 1101' lösbar befestigt, so dass z.B. im Wartungs- oder Reparaturfall das Zahnrad 2' auf einfache Weise ausgetauscht bzw. ausgebaut werden kann.

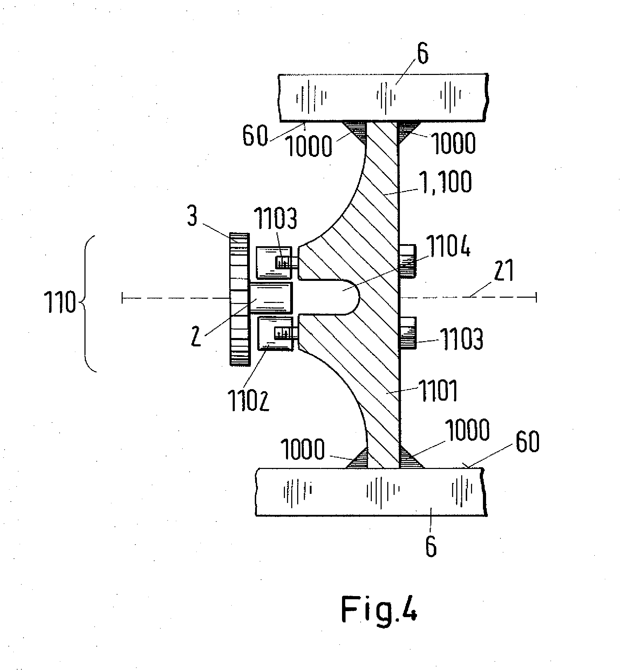

In Fig. 4 ist schliesslich eine erfindungsgemässe Nabenhalterung 1 in einem Querschnitt entlang der Schnittlinie I-I gemäss Fig. 2 schematisch dargestellt, die zum Beispiel durch Giessen oder Schmieden oder mittels eines anderen geeigneten, dem Fachmann bekannten Verfahren aus einem Metall oder einer Metalllegierung hergestellt sein kann.

Bei dem Ausführungsbeispiel der Fig. 4 ist die Nabenhalterung 1 über die Grundplatte 100 mittels Schweissnähten 1000 beidseitig an die beiden Gleitbahnbleche 6 im Bereich der Gleitbahnflächen 60 angeschweisst. Im Bereich der Wellennabe 110 weist die Nabenhalterung 1 eine wulstartige Nabenverstärkung 111 auf, wodurch die Welle 2, mit der das Zahnrad 3 drehfest verbunden ist, optimal stabilisiert und fixiert ist, selbst wenn die Nabenhalterung 1 im Betriebszustand der Hubkolbenbrennkraftmaschine, in die die Nabenhalterung 1 eingebaut ist, erheblichen dynamischen Belastungen ausgesetzt ist.

Die Wellennabe 110 ist dabei ebenfalls zweiteilig aufgebaut und umfasst ein erstes Nabenteil 1101, das an die Gleitbahnen des Ständers angeschweisst ist, und ein zweites Nabenteil 1102, das zur Aufnahme der Welle 2 des Zahnrades 3 dient. Das zweite Nabenteil 1102 wird dabei mit einem oder mehreren Befestigungsmitteln 1103, z.B. mittels Schrauben 1103 oder Bolzen 1103 am ersten Nabenteil 1101 lösbar befestigt, so dass z.B. im Wartungs- oder Reparaturfall das Zahnrad 2 auf einfache Weise ausgetauscht bzw. ausgebaut werden kann. Im ersten Nabenteil 1101 kann dabei in einem vorgebbaren Bereich um die Achse 21 eine Aussparung 1104 vorgesehen sein, die zu einer Material und Gewichtsersparnis des ersten Nabenteils 1101 führt und gleichzeitig zur Verbesserung der dynamischen Eigenschaften der erfindungsgemässen Nabenhalterung 1 im Betriebszustand beitragen kann.

Es versteht sich, dass die oben beschriebenen Ausführungsbeispiele der vorliegenden Erfindung lediglich exemplarisch zu verstehen sind und die Erfindung insbesondere, aber nicht nur, auch alle geeigneten Kombinationen der beschriebenen Ausführungsbeispiele umfasst.

## Patentansprüche

1. Nabenhalterung für die Aufnahme einer Welle (2) eines Zahnrads (3) zum Antrieb einer Versorgungseinheit (4) einer Hubkolbenbrennkraftmaschine (5), insbesondere Zweitakt-Grossdieselmotor (5), wobei die Nabenhalterung eine Grundplatte (100) zum Einbau zwischen zwei Gleitflächen (60) zweier Gleitbahnbleche (6) eines Ständers (7) der Hubkolbenbrennkraftmaschine (5), sowie eine Wellennabe (110) zur Aufnahme der Welle (2) des Zahnrads (3) umfasst und die Nabenhalterung im Bereich der Wellennabe (110) eine wulstartige Nabenverstärkung (111) aufweist, **dadurch gekennzeichnet, dass** die Grundplatte (100) einwandig ausgeführt ist.

2. Nabenhalterung nach einem der Ansprüche 1 oder 2, wobei die Nabenhalterung im Bereich der Wellennabe (110) doppelseitig eine wulstartige Nabenverstärkung (111) aufweist.

3. Nabenhalterung nach einem der vorangehenden Ansprüche, wobei die Wellennabe (110) derart in der Grundplatte (100) vorgesehen ist, dass die Wellennabe (110) im Einbauzustand der Nabenhalterung zwischen den beiden Gleitflächen (60) der Gleitbahnbleche (6) des Ständers (7) zentriert angeordnet ist.

4. Nabenhalterung nach einem der vorangehenden Ansprüche, wobei die Wellennabe (110) derart in der Grundplatte (100) vorgesehen ist, dass die Wellennabe (110) im Einbauzustand der Nabenhalterung zwischen den beiden Gleitflächen (60) der Gleitbahnbleche (6) des Ständers (7) asymmetrisch angeordnet ist.

5. Ständer, insbesondere Ständer für einen Grossdieselmotor (5), umfassend eine Nabenhalterung (1) nach einem der Ansprüche 1 bis 5.

6. Ständer nach Anspruch 6, wobei die Grundplatte (100) mit den beiden Gleitbahnblechen (6) des Ständers verschweisst ist.

7. Ständer nach einem der Ansprüche 6 oder 7, wobei die Grundplatte (100) mit den beiden Gleitbahnblechen (6) des Ständers beidseitig verschweisst ist.

8. Hubkolbenbrennkraftmaschine, insbesondere Grossdieselmotor, umfassend einen Ständer (7) nach einem der Ansprüche 6 bis 8 mit einer Nabenhalterung (1) nach einem der Ansprüche 1 bis 5.
